# EUROPEAN PATENT SPECIFICATION

(11) **EP 1 309 411 B1**
(45) Date of publication and mention of the grant of the patent: **11.03.2009**
(21) Application number: 01962509.4
(22) Date of filing: 08.08.2001
(51) Int. Cl.: B05D 5/02, B44D 7/00

(54) **COATING COMPOSITION FOR ARTISTIC REPRODUCTIONS**
BESCHICHTUNGSZUSAMMENSETZUNG FÜR KUNSTREPRODUKTIONEN
COMPOSITION DE REVETEMENT POUR REPRODUCTIONS ARTISTIQUES

(30) Priority: 08.08.2000 CA 2315959
(43) Date of publication of application: 14.05.2003
(73) Proprietor: Brushstrokes Fine Art Inc., Richmond Hill, Ontario L4B 1H1 (CA)
(72) Inventor: OREKHOV, Mikhail, M., Toronto, Ontario M4N 2H7 (CA)
(74) Representative: Bates, Philip Ian
(86) International application number: PCT/CA2001/001132
(87) International publication number: WO 2002/011901

(56) References cited:
- DE-A- 3 433 617
- GB-A- 1 457 869
- DATABASE WPI Section Ch, Week 198034 Derwent Publications Ltd., London, GB; Class A05, AN 1980-59319c XP002186974 & JP 55 089373 A (NIPPON GAKKI SEIZO), 5 July 1980 (1980-07-05)
- PATENT ABSTRACTS OF JAPAN vol. 013, no. 579, 20 December 1989 (1989-12-20) & JP 01 242670 A (MIZUTANI PAINT), 27 September 1989 (1989-09-27)

## Description

### FIELD OF THE INVENTION

The present invention relates to the use of certain coatings used to protect and/or enhance the surface of artistic images.

### BACKGROUND OF THE INVENTION

There is a large and increasing demand for reproductions of original works of art that accurately reflect both the true color and texture of the original.

United States Patent No. 5,667,747 describes a process and apparatus for molding a thin sheet of thermoplastic material into an accurate three-dimensional relief image that mimics the brushstrokes of the original art. While this reproduction is a great improvement over two-dimensional photograph-like reproductions, the surface of the reproduction has a smooth plastic-like feel and the degree of gloss or shine tends to be constant over the entire surface. In original paintings, some areas naturally tend to be glossier than others due to, for example, the quality, age and amount of oil in the pigment used. Particularly in works of art which combine mixed media, there are areas which have different degrees of glossiness and/or texture.

With both original works of art and reproductions, protective coatings are often used to prevent damage to the image due to wear and tear, ultraviolet radiation, etc. When dealing with reproductions on a.material such as PVC, the coating should have certain characteristics. The composition must be one that adheres well to PVC both in the wet and dry states. It should not interact with the pigments of the image or with the PVC material itself and the coating should not discolor or obscure the image, rather it should provide enhanced wearability and abrasion resistance.

Various types of coatings have been used to protect original artistic images. These include, for example, varnishes, waxes and synthetic resins. Certain finishes, such as acrylic gel containing sand, are sometimes used by artists to create special effects. While these coatings may be suitable for certain types of original artwork, they are not very effective as coatings on artistic reproduction on thermoplastic material. Acrylic gel, for example, does not adhere well to PVC and the finish easily peels off.

It is known to produce polyurethane coatings on PVC. United States Patent Nos. 3,265,805, 4,017,493 and 4,045,600 describe processes for coating PVC using one component or two component polyurethane systems. However, the use of solvent containing coating agents presents problems both in terms of the health of the worker and in terms of reactivity with the substrate to be coated. United States Patent No. 4,876,302, addresses this problem by disclosing aqueous coating compositions suitable for use as coating and finishing agents for PVC surfaces.

A further problem associated with many of the available coatings for PVC is that they provide a smooth homogenous cover while the surface of an original painting often has a degree of texture. This texture is due to both the composition of the paint used and the inherent texture imparted by the canvas on which the image is painted. Thus, there remains an unmet need for a coating composition for artistic images, particularly reproductions on thermoplastic materials, that can impart realistic texture to the surface.

Glass beads have been used in other types of coatings for other purposes. For example, JP11050378 discloses water-proofed cloth which is coated with polyurethane containing glass beads. The cloth provides superior waterproofness, luminescence and re-reflecting properties. United States Patent No. 5,981,033 discloses pavement marking tape in which glass beads which reflect incident light are held in a polyurethane binder. JP06010319 discloses a road mark material which comprises glass beads having a diameter of about 50 to 3000 microns in a reactive oligomer. The coating is designed to have good abrasion resistance.

The present invention addresses the problems of the prior art by providing a coating composition and a method of coating an artistic reproduction that results in a surprisingly realistic texture on the surface of an artistic reproduction.

### SUMMARY OF THE INVENTION

An object of an aspect of the present invention is to provide a coating for use on artistic reproductions that interacts well with thermoplastic materials, does not detract from the image and actually enhances the quality of reproduction.

The use of a synthetic resin containing glass beads as a coating for use on artistic reproductions is disclosed and a method is provided for imparting surface texture to an artistic reproduction comprising adding glass beads to a synthetic resin to form a coating composition and applying the coating composition to the artistic reproduction.

According to the present invention there is provided the use of a coating composition for imparting a rough surface texture to an artistic reproduction, said composition comprising a synthetic resin component and glass beads in an aqueous dispersion.

In another aspect of the invention, there is provided a method of imparting surface texture to an artistic reproduction. The method comprises the steps of:
i) providing a composition comprising a synthetic resin and glass beads in an aqueous dispersion;
ii) applying the composition to all or part of the surface of an artistic reproduction; and
iii) allowing the composition to dry on the surface of the reproduction wherein, upon drying, the surface of the reproduction attains a rough texture in areas where the composition was applied.

### DETAILED DESCRIPTION OF THE INVENTION

As discussed above, there are problems associated with the current state of the art reproductions that are available in terms of the surface texture which influences how a reproduction feels and looks. In spite of the many types of coatings that are available for various purposes, none meet the requirements of retaining brilliant visual effects while imparting a textured feel and look to the surface of an artistic reproduction.

The present invention is directed to the surprising result that, by incorporation of glass beads into a synthetic resin coating, the plastic-like surface of a reproduction can be replaced by a canvas-like, natural feel and look.

In accordance with the present invention, there is provided a process for coating an artistic reproduction. Depending on the image to be coated, a basic coating is selected from gloss, semi-gloss or matte finishes. The type of finish to be selected is based on the appearance of the original art work. It will be apparent to one skilled in the art that various different types of resins may be used alone or in blends as long as the resin composition is compatible with the surface to be coated.

A size of glass bead is then selected usually from a range of diameters of about 40 to 450 microns. The beads may be in size groupings of about 40 to 80, 80 to 150, 150 to 210 and 300 to 450 microns. Typically larger beads will be selected for larger images and smaller diameter beads will be selected for smaller images. The original image will also dictate the size of bead to be used. For example, if an original which has a stonelike appearance is to be reproduced, then larger beads will be used to impart a rougher feel to the surface. About 1 to 4 parts of beads are mixed with about 2 to 8 parts of a gloss, semi-gloss or matte synthetic resin based coating. Approximately 1 part beads to 7 parts of polyurethane has been found to be particularly effective. The beads are mixed with the polyurethane to form a slurry. The glass beads/polyurethane mixture is then applied to the painting based on an artist's interpretation of the original. The coating may be applied to the overall surface of the reproduction or only to specific areas. The coating can be applied by hand using a brush or the application may be automated using a machine. Compositions comprising different sized beads in different finishes, e.g gloss or matte, may be applied to different parts of the same image. The polyurethane base has been found to adhere well to the surface in both the dry and wet stages. Upon drying the coating provides texture to the surface without interfering with visibility.

While the coating composition has been described particularly with respect to PVC surfaces, it is clearly apparent that the coating can be used to enhance the surface feel of other substrates such as polyurethane, epoxy, melamine, acrylic resins and similar smooth surfaces. The coating can also be used on other types of reproductions such as canvas transfers and laminates.

Various types of synthetic resins and combinations thereof can be used as a base for containing the glass beads. Polyurethane and acrylic/polyurethane compositions have been found to be very effective in the present invention. Of course, it is clearly apparent to one skilled in the art that other water-borne resins can be used with glass beads to provide the compositions of the present invention.

### EXAMPLE 1

A water-borne two-part polyurethane-acrylic coating cross-linked with a substituted imine ester such as that sold by Aqua Surface Technology Coating Products is selected in a semi-gloss finish. Glass beads having a diameter in the range of about 44 to 88 microns are added to the polurethane-acrylic coating in a ratio of 1 part beads to 7 parts coating and mixed. Immediately before use, the composition is again mixed to provide an even distribution of glass beads. An artist then uses a brush to pick up an amount of the coating composition including the glass beads and applies the mixture to the surface of an artistic reproduction that has been prepared on PVC. The mixture is applied to the image at the artist's discretion in accordance with the nature of the image.

## Claims

1. Use of a coating composition for imparting a rough surface texture to an artistic reproduction, said composition comprising a synthetic resin component and glass beads in an aqueous dispersion.

2. The use of the coating composition of claim 1, wherein said synthetic resin component comprises polyurethane.

3. The use of the coating composition of claim 1, wherein said synthetic resin component comprises polyurethane and acrylic.

4. The use of the coating composition of claim 1, wherein said glass beads have a diameter of about 40 to 450 microns.

5. The use of the coating composition of claim 1, wherein said glass beads have a diameter of about 80 to 450 microns.

6. A method of imparting surface texture to an artistic reproduction, said method comprising the steps of:
i) providing a composition comprising a synthetic resin and glass beads in an aqueous dispersion;
ii) applying said composition to all or part of the surface of an artistic reproduction; and
iii) allowing said composition to dry on the surface of said reproduction wherein upon drying the surface of said reproduction attains a rough texture in areas where the composition was applied.

7. The method of claim 6, wherein said composition is applied by hand using a brush.

8. The method of claim 6, wherein said composition is applied using a machine.

## Patentansprüche

1. Verwendung einer Beschichtungszusammensetzung für das Verleihen einer rauen Oberflächentextur einer künstlerischen Reproduktion, wobei die Zusammensetzung eine Kunstharzkomponente und Glasperlen in einer wässrigen Dispersion umfasst.

2. Verwendung der Beschichtungszusammensetzung nach Anspruch 1, wobei die Kunstharzkomponente Polyurethan umfasst.

3. Verwendung der Beschichtungszusammensetzung nach Anspruch 1, wobei die Kunstharzkomponente Polyurethan und Acryl umfasst.

4. Verwendung der Beschichtungszusammensetzung nach Anspruch 1, wobei die Glasperlen einen Durchmesser von etwa 40 bis 450 Mikron aufweisen.

5. Verwendung der Beschichtungszusammensetzung nach Anspruch 1, wobei die Glasperlen einen Durchmesser von etwa 80 bis 450 Mikron aufweisen.

6. Methode zum Verleihen von Oberflächentextur einer künstlerischen Reproduktion, wobei die Methode folgende Schritte umfasst:
i) Bereitstellen einer Zusammensetzung umfassend ein Kunstharz und Glasperlen in einer wässrigen Dispersion;
ii) Aufbringen der Zusammensetzung auf die gesamte oder einen Teil der Oberfläche einer künstlerischen Reproduktion; und
iii) Gestatten, dass die Zusammensetzung auf der Oberfläche der Reproduktion trocknet, wobei die Oberfläche der Reproduktion beim Trocknen eine raue Textur auf Bereichen erhält, wo die Zusammensetzung aufgebracht worden ist.

7. Methode nach Anspruch 6, wobei die Zusammensetzung von Hand mit Hilfe eines Pinsels aufgebracht wird.

8. Methode nach Anspruch 6, wobei die Zusammensetzung mit Hilfe einer Maschine aufgebracht wird.

## Revendications

1. Utilisation d'une composition d'enduit pour conférer une texture de surface rugueuse à une reproduction artistique, ladite composition comprenant un composant de résine synthétique et des perles de verre en dispersion aqueuse.

2. Utilisation de la composition d'enduit de la revendication 1, dans laquelle le composant de résine synthétique comprend du polyuréthane.

3. Utilisation de la composition d'enduit de la revendication 1, dans laquelle le composant de résine synthétique comprend du polyuréthane et de l'acrylique.

4. Utilisation de la composition d'enduit de la revendication 1, dans laquelle lesdites perles de verre ont un diamètre d'environ 40 à 450 microns.

5. Utilisation de la composition d'enduit de la revendication 1, dans laquelle lesdites perles de verre ont un diamètre d'environ 80 à 450 microns.

6. Procédé pour conférer une texture superficielle à une reproduction artistique, ledit procédé comprenant les étapes consistant à :
i) fournir une composition comprenant une résine synthétique et des perles de verre en dispersion aqueuse ;
ii) appliquer ladite composition à la surface entière ou partielle d'une reproduction artistique ; et
iii) laisser ladite composition sécher sur la surface de ladite reproduction, la surface de ladite reproduction acquérant, une fois sèche, une texture rugueuse dans les zones où la composition a été appliquée.

7. Procédé de la revendication 6, dans lequel ladite composition est appliquée à la main au moyen d'un pinceau.

8. Procédé de la revendication 6, dans lequel ladite composition est appliquée à la machine.
